Europäisches Patentamt

(19) European Patent Office

Office européen des brevets

(11) Publication number: **0 001 908**
**B1**

(12) # EUROPEAN PATENT SPECIFICATION

(45) Date of publication of patent specification: **10.06.81**

(51) Int. Cl.³: **H 01 R 9/22, H 02 K 5/22**

(21) Application number: **78300557.2**

(22) Date of filing: **27.10.78**

(54) Electrical connector housing.

(30) Priority: **07.11.77 US 849049**

(43) Date of publication of application:
**16.05.79 Bulletin 79/10**

(45) Publication of the grant of the European patent:
**10.06.81 Bulletin 81/23**

(84) Designated Contracting States:
**DE FR GB**

(56) References cited:
**FR - A - 2 309 022**
**US - A - 3 541 365**
**US - A - 3 725 707**

(73) Proprietor: **AMP INCORPORATED**
**Eisenhower Boulevard**
**Harrisburg, Pennsylvania (US)**

(72) Inventor: **Porta, Gary Douglas**
**225 East Main Street Apt. F**
**Shiremanstown Pennsylvania (US)**

(74) Representative: **Stuart-Prince, Richard Geoffrey et al,**
**20 Queensmere**
**Slough, Berkshire SL1 1YZ (GB)**

Courier Press, Leamington Spa, England.

## Electrical Connector Housing

The invention relates to an electrical connector housing for mounting on a stator such as that of an electric motor.

Electrical connector housings are designed for mounting on stators to receive terminals for connecting the fine wire of the stator winding to a relatively large gauge external lead.

U.S. Patent Specification 3725707 describes a known connector housing for mounting on a stator having adjacent pole portions defining a winding receiving cavity opening to a substantially flat face which connector housing is moulded in one piece of insulating material and comprises a body portion formed with a terminal receiving cavity open at a top and having a substantially flat base for mounting on the face of the stator, a supporting rib extending from the side of the body.

However, such housing does not include means to clamp the housing to the stator.

According to the invention, the connector housing is characterised in that the rib has, at a root end, a supporting surface extending below the base and perpendicularly thereto and, at a free end, first and second, laterally spaced, resiliently flexible clamping fingers extending in the same direction as the supporting surface, the rib being adapted to bridge the cavity with the base of the body portion seated on the stator face and the supporting surface and the clamping fingers extending into the cavity and having hooked free ends for engagement with adjacent pole portions of the stator on opposite sides of the cavity to clamp the connector housing to the stator.

The connector housings according to the invention can be readily assembled securely with the stators even though the stators may be coated with insulating epoxy layers which alter substantially in thickness both on different parts of the stator faces and on different stators causing variations in manufacturing tolerances.

An example of the invention will now be described with reference to the accompanying drawings in which:

Figure 1 is a perspective view of an assembly of a stator of an electric motor and a connector housing according to the invention;

Figure 2 is a plan view of a portion of the assembly of Figure 1;

Figure 3 is a cross-sectional view of a portion of the assembly with the connector housing in a first position of engagement with the stator;

Figure 4 is a perspective view of the connector housing; and

Figure 5 is a cross-sectional view similar to Figure 3 with the connector housing in a second position of engagement with the stator.

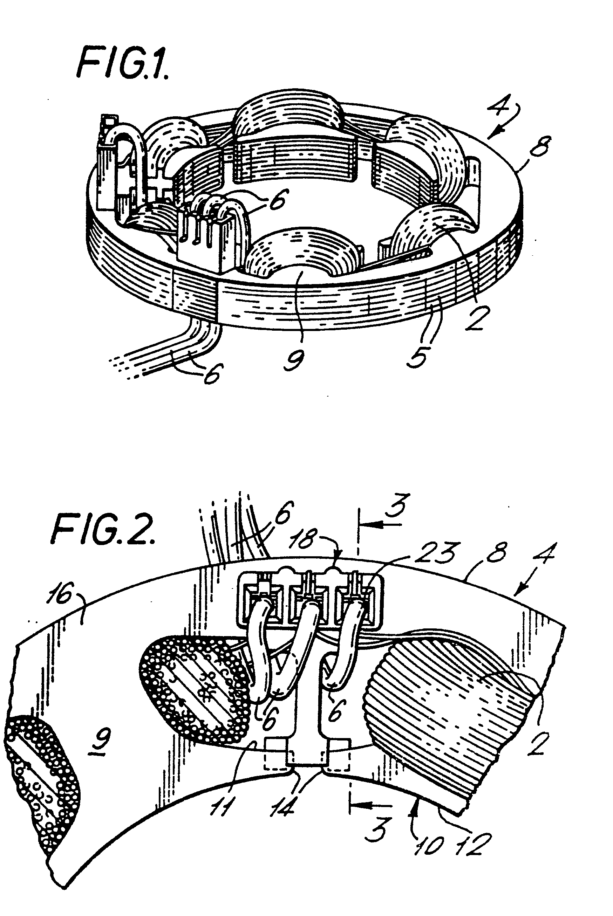

As shown particularly in Figures 1 and 2 a stator 4 of known type comprises a lamination 8 of annular metal laminae 5 having angularly spaced, radially inwardly extending portions 9 with enlarged inner ends 10 defining pole pieces, adjacent pole pieces defining cavities extending between opposite faces 16 and 50 of the stator and each receiving a pair of windings 2. Respective wall portions 11 of adjacent ends 14 of the pole pieces are separated by a narrow gap.

The connector housing 18 is moulded in one piece of stiffly flexible plastics material (such as nylon) and comprises a body portion 20 having a flat base 22, end walls 24 and side walls 26, 28 upstanding from the base forming terminal receiving cavities 23 open at a top. Slots 25 and 27 are formed in the opposite side walls 26, 28 for receiving the wires extending from the windings when connected to terminals 31 received in the respective cavities as described in US Patent 4,038,573.

A clamping rib 30 extends from the sidewall 26 and has at a root end an enlarged portion 32 defining a supporting surface 34 extending below the base of the body and substantially perpendicular thereto. The free end of the rib is formed with a transverse flange 42 from which depend a pair of resiliently flexible clamping fingers 40 spaced apart on opposite sides of a third finger 38. The fingers 40 have hooks 44 at their free ends.

An enlargement 36 is formed on the free end of the rib which enlargement is undercut to define shoulders from which extend surface portions 48 which taper gradually towards a lower end 46.

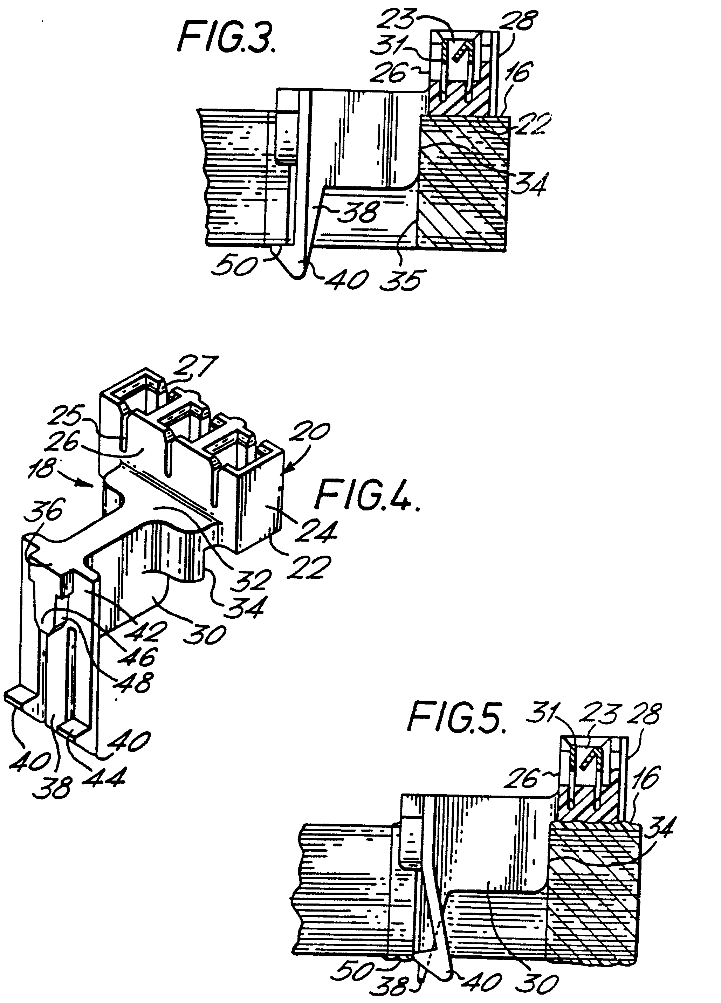

The housing 18 is assembled with the stator by locating it above the upper face 16 of the stator with the rib extending radially inwardly and moved downwardly until the base of the body abuts face 16 and the hooks 44 of the fingers 40 snap under the other face 50 of the stator clamping the housing firmly on the stator with the rib bridging the cavity so that supporting surface 34 engages a wall portion 35 of the cavity opposite wall portions 11. The tapering surface portions 48 are wedged against the adjacent ends 14 of the pole pieces. Connection can then be made to the winding wires as described in the above-mentioned specification and lead wires 6 connected to respective terminals. The finger 38 obstructs the gap between the ends 14 of the pole pieces to prevent wires being moved through the gap into the centre of the stator. This first position of engagement of the housing with the stator (shown in Figure 3) obtains when insulating coating on the stator faces is thin and uniform. However, such coatings may frequently be quite thick, for example 0.5mm, in which case the hooks 44 will not extend under the face 50. In this case the fingers 40 will resiliently flex to engage wall portions 11 pressing surface 34 against wall 35, clamping the housing on the stator. Further stability is provided in the second position by lodgement of the lower ends of the boss between adjacent pole sections 14.

The connector housing is therefore adapted for assembly with a stator when the stator is coated with insulating layers of different thicknesses as would obtain under various manufacturing conditions.

## Claims

1. An electrical connector housing (18) for mounting on a stator (4) having adjacent pole portions (14) defining a winding receiving cavity opening to a substantially flat face which housing (18) is moulded in one piece of insulating material and comprises a body portion (20) formed with a terminal receiving cavity (23) open at a top and having a substantially flat base (22) for mounting on the face (16) of the stator, a supporting rib (30) extending from the side of the body (20) characterised in that, the rib (30) has, at a root end, a supporting surface (34) extending below the base (22) and perpendicularly thereto and, at a free end, first and second, laterally spaced, resiliently flexible clamping fingers (40) extending in the same direction as the supporting surface (34), the rib (30) being adapted to bridge the winding receiving cavity with the base (22) of the body portion (20) seated on the stator face (16) and the supporting surface (34) and the clamping fingers (40) extending into the winding receiving cavity and having hooked free ends (44) for engagement with adjacent pole portions (14) of the stator on opposite sides of the cavity to clamp the connector housing to the stator.

2. An electrical connector housing according to Claim 1, characterised in that, a third finger (38) extends in the same sense and between the first two fingers (40) to extend over a gap between the adjacent pole portions (14).

3. An electrical connector housing according to Claim 1 or Claim 2 characterised in that, the free end of the rib (30) is formed with an enlargement (36) adapted to seat on adjacent pole portions (14).

## Revendications

1. Boîtier (18) de connecteur électrique destiné à être monté sur un stator (4) comportant des parties polaires adjacentes (14) qui délimitent une cavité de réception d'un enroulement s'ouvrant vers une face sensiblement plane, ce boîtier (18) étant moulé d'une seule pièce en matière isolante et comprenant un corps (20) qui présente une cavité (23) de réception d'une borne ouverte à une partie supérieure, et comportant une base sensiblement plane (22) destinée à être montée sur la face (16) du stator, une nervure (30) de support faisant saillie du côté du corps (20), caractérisé en ce que la nervure (30) présente, à une extrémité de pied, une surface (34) de support qui descend au-dessous de la base (22), perpendiculairement à cette dernière, et, à une extrémité libre, des premier et second doigts flexibles et élastiques (40) de bridage, espacés latéralement et faisant saillie dans le même direction que la surface (34) de support, la nervure (30) étant conçue pour s'étendre au-dessus de la cavité de réception de l'enroulement alors que la base (22) du corps (20) repose sur la face (16) du stator et que la surface (34) de support et les doigts (40) de bridage pénètrent dans la cavité de réception de l'enroulement, les doigts (40) comportant des extrémités libres (44) en forme de crochet destinées à s'enclencher avec des parties polaires adjacentes (14) du stator, sur des côtés opposés de la cavité, afin de brider le boîtier de connecteur sur le stator.

2. Boîtier de connecteur électrique selon la revendication 1, caractérisé en ce qu'un troisième doigt (38) fait saillie dans le même plan que les deux premiers doigts (40) et entre eux afin de passer sur un intervalle compris entre les parties polaires adjacentes (14).

3. Boîtier de connecteur électrique selon la revendication 1 ou la revendication 2, caractérisé en ce que l'extrémité libre de la nervure (30) comporte un bossage (36) conçu pour s'appliquer sur des parties polaires adjacentes (14).

## Patentansprüche

1. Gehäuse (18) für einen elektrischen Verbinder zur Befestigung an einem Stator (4), der benachbarte Polteile (14) hat, die einen Windungsaufnahmeraum begrenzen, der sich zu einer im wesentlichen flachen Stirnfläche öffnet, wobei das Gehäuse (18) aus einem Stück eines isolierenden Materials hergestellt ist und einen Hauptteil (20) aufweist, der mit einem an der Oberseite offenen Anschlussaufnahmeraum (23) ausgebildet ist und der eine im wesentlichen flache Unterseite (22) zur Anordnung auf der Stirnfläche (16) des Stators hat, wobei sich eine Stützrippe (30) von der Seite des Hauptteils (20) her erstreckt, dadurch gekennzeichnet, dass die Rippe (30) an einem Wurzelende eine Stützfläche (34) hat, die sich unter die Unterseite (22) und senkrecht zu dieser erstreckt, und dass die Rippe an einem freien Ende erste und zweite, mit seitlichem Abstand angeordnete, elastisch nachgiebige Klemmfinger (40) aufweist, die sich in derselben Richtung erstrecken wie die Stützfläche (34), dass die Rippe (30) so ausgebildet ist, dass sie den Windungsaufnahmeraum überbrückt, wobei die Unterseite (22) des Hauptteils (20) auf der Stirnfläche (16) des Stators aufliegt und die Stützfläche (34) und die Klemmfinger (40) sich in den Windungsaufnahmeraum hinein erstrecken und mit Haken versehene freie Enden (44) zum Eingriff mit benachbarten Polteilen (14) des Stators auf gegenüberliegenden Seiten des Hohlraums haben, um den Verbinder am Stator festzuklemmen.

2. Gehäuse für einen elektrischen Verbinder nach Anspruch 1, dadurch gekennzeichnet, dass sich ein dritter Finger (38) in dem selben Sinn und zwischen den ersten beiden Fingern (40) erstreckt, um sich über einen Schlitz zwischen den benachbarten Polteilen (14) zu erstrecken.

3. Gehäuse für einen elektrischen Verbinder nach Anspruch 1 oder Anspruch 2, dadurch gekennzeichnet, dass das freie Ende der Rippe (30) mit einer Erweiterung (36) ausgebildet ist, die geeignet ist, an benachbarten Polteilen (14) anzuliegen.

## FIG.1.

## FIG.2.

**FIG.3.**

**FIG.4.**

**FIG.5.**